# EUROPEAN PATENT APPLICATION

(11) **EP 4 807 876 A1**
(43) Date of publication of application: **16.09.2026**
(21) Application number: 24890237.1
(22) Date of filing: 19.08.2024
(51) Int. Cl.: H01M 50/258, H01M 50/262, H01M 50/244, H01M 50/249

(54) **BATTERY BOX, BATTERY AND ELECTRIC DEVICE**

(30) Priority: 17.11.2023 CN 202311542138
(71) Applicant: Contemporary Amperex Technology Co., Limited, Ningde, Fujian 352100 (CN)
(72) Inventor: WU, Kai, Ningde, Fujian 352100 (CN); WANG, Liangyi, Ningde, Fujian 352100 (CN); WANG, Yalei, Ningde, Fujian 352100 (CN); WANG, Zhi, Ningde, Fujian 352100 (CN); QIN, Feng, Ningde, Fujian 352100 (CN); ZHANG, Haidong, Ningde, Fujian 352100 (CN)
(74) Representative: Ziebig Hengelhaupt Intellectual Property Attorneys Patentanwaltskanzlei PartGmbB
(86) International application number: PCT/CN2024/113191
(87) International publication number: WO 2025/102875

(57) **Abstract**

A battery box (200), a battery (1100) and an electric device, the battery box (200) comprising a first box body (210) and a connector (220), wherein the first box body (210) is provided with an accommodating space (201) for accommodating a battery cell (100), a fixing portion (211) is provided at the side of the first box body (210) that faces away from the accommodating space (201), and the fixing portion (211) is provided with a first connecting hole (2111); and the connector (220) is provided with a threaded hole (221) for threaded connection with a bolt (230), the first connecting hole (2111) and the threaded hole (221) being arranged opposite each other, enabling the bolt (230) to pass through the first connecting hole (2111) and thread into the threaded hole (221).

## Description

The present application claims priority to the Chinese patent application filed with the China National Intellectual Property Administration on November 17, 2023, with application number 202311542138.X and titled "BATTERY BOX, BATTERY, AND ELECTRIC APPARATUS", which is incorporated herein by reference in its entirety.

### TECHNICAL FIELD

The present application pertains to the technical field of batteries, and particularly relates to a battery box, a battery, and an electric apparatus.

### BACKGROUND

Battery packs are widely used in various electronic devices, such as mobile phones, notebook computers, electric vehicles, electric automobiles, electric airplanes, electric ships, electric toy cars, electric toy ships, electric toy airplanes, and electric tools.

In the research of battery technology, how to reduce the size of the battery and increase the volumetric energy density of the battery is an important research direction.

### SUMMARY

A purpose of the embodiments of the present application is to: provide a battery box, a battery, and an electric apparatus to increase the volumetric energy density of the battery.

The technical solution adopted by the embodiments of the present application is:
According to a first aspect, a battery box is provided, and the battery box includes a first box and a connecting member. The first box is provided with an accommodating space for accommodating a battery cell, a side portion of the first box facing away from the accommodating space is provided with a fixing portion, the fixing portion is provided with a first connecting hole, the connecting member is provided with a threaded hole for screwing with a bolt, and the first connecting hole and the threaded hole are oppositely disposed such that the bolt passes through the first connecting hole and screws with the threaded hole.

In the battery box of the embodiments of the present application, the connecting member is provided with a threaded hole that engages with the bolt, such that the connecting member can replace a nut to connect with the bolt; at the same time, the connecting member can also be designed without following the standard size of the nut, that is, the size of the connecting member can be designed to be smaller than the standard size of the nut, saving space on the side of the first box facing the fixing portion, thereby reducing the size of the battery box, reducing the size of the battery, and increasing the volumetric energy density of the battery.

In one embodiment, the connecting member is a steel member, an aluminum alloy member, or a copper alloy member.

On the basis of satisfying the connection strength between the bolt and the connecting member, the size of the connecting member can be made smaller, further saving the space occupied by the first box, reducing the size of the battery box, and increasing the volumetric energy density of the battery.

In one embodiment, the accommodating space and the fixing portion are respectively located on two opposite sides of the first box along a first direction.

By adopting the technical solution of this embodiment, the size of the connecting member in the first direction can be designed to be smaller, saving space in the first direction, such that the battery can be applied to an electric apparatus with stricter requirements on the size in the first direction.

In one embodiment, an axis of the first connecting hole is parallel to a second direction, the first direction being perpendicular to the second direction.

By adopting the technical solution of this embodiment, the bolt passes through the first connecting hole along the second direction and then screws with the threaded hole; and the second direction is perpendicular to the first direction, and the bolt can be mounted on other sides of the first box along the first direction, facilitating the mounting of the bolt.

In one embodiment, a nominal diameter of the threaded hole is D, and a size of the connecting member in the first direction is L, where 1.1 ≤ L/D ≤ 2, and optionally, 1.2 ≤ L/D ≤ 1.7.

By adopting the technical solution of this embodiment, the reliability of the connection of the connecting member and the space-saving effect can be taken into account at the same time, improving the use reliability of the battery and the effect of volumetric energy density.

In one embodiment, the connecting member is an elongated structure extending along a third direction, the first direction, the second direction, and the third direction being pairwise perpendicular.

By adopting the technical solution of this embodiment, the connecting member has an elongated structure, such that the connecting member has a larger size in the third direction, and the structural reliability of the connecting member is good, improving the reliability of connection with the bolt; in addition, multiple holes of the bolt can be provided on the connecting member in the third direction to improve the reliability of connection with a second box or a mounting mating member.

In one embodiment, multiple threaded holes are provided, and the multiple threaded holes are spaced apart along the third direction.

By adopting the technical solution of this embodiment, the connecting member can be connected with the multiple threaded holes through screwing of multiple bolts, which can achieve multi-point connection between the first box and the second box or multi-point connection between the first box and the mounting mating member, improving the connection reliability and improving the use reliability of the battery.

In one embodiment, the fixing portion is configured with a mounting cavity for communication with the first connecting hole, and the connecting member is located in the mounting cavity.

By adopting the technical solution of this embodiment, the connecting member is located in the mounting cavity of the fixing portion, which can fully utilize the space inside the fixing portion, facilitating reduction of the size of the first box and increasing the volumetric energy density of the battery; in addition, the fixing portion can also protect the connecting member, improving the connection reliability.

In one embodiment, the connecting member is bonded to a cavity wall surface of the mounting cavity.

By adopting the technical solution of this embodiment, the connecting member is fixed in the mounting cavity by means of bonding. In this way, the fixing of the connecting member is achieved, and the screwing operation of the bolt and the threaded hole is simpler and faster. Additionally, the bonding fixing method has simple fixing operation, which is conducive to improving the assembly efficiency.

In one embodiment, at least one of two opposite surfaces of the connecting member along the first direction abuts against the cavity wall surface of the mounting cavity.

By adopting the technical solution of this embodiment, at least one of the two opposite surfaces of the connecting member along the first direction abuts against the cavity wall surface of the mounting cavity, which can save the space of the mounting cavity in the first direction, reduce the size of the first box in the first direction, reduce the size of the battery in the first direction, and increase the volumetric energy density of the battery.

In one embodiment, the threaded hole includes a first threaded hole section and a second threaded hole section in communication with each other. The connecting member includes a body and a protruding portion that are connected, the protruding portion protrudes from a surface of the body, the body is configured with the first threaded hole section, and the protruding portion is configured with the second threaded hole section.

By adopting the technical solution of this embodiment, the provision of the protruding portion can reduce material accumulation of the connecting member, which is conducive to achieving a lightweight design.

In one embodiment, a height of the protruding portion protruding from the body is h, a nominal diameter of the threaded hole is D, and 0.5 ≤ h/D ≤ 2; and optionally, 0.7 ≤ h/D ≤ 1.5.

By adopting the technical solution of the embodiment, the connecting member can ensure both the connection reliability and the size of the battery box.

In one embodiment, a height of the protruding portion protruding from the body is h, and 0.5 mm ≤ h/D ≤ 50 mm; and optionally, 5 mm ≤ h/D ≤ 30 mm.

By adopting the technical solution of the embodiment, the connecting member can ensure both the connection reliability and the size of the battery box.

In one embodiment, the first box includes a plate member, and the accommodating space and the fixing portion are respectively located on two opposite side portions of the plate member along the first direction; and a side portion of the plate member is bent to form a bent structure, at least part of the bent structure forms the fixing portion; or, the first box further includes a side frame bar, the side frame bar is connected with a side portion of the plate member, and at least part of the side frame bar forms the fixing portion.

By adopting the technical solution of this embodiment, the structure of the first box is simple, and the processing and manufacturing are convenient.

In one embodiment, the battery box further includes a second box, the second box is connected with the fixing portion, and the first box and the second box enclose the accommodating space.

By adopting the technical solution of this embodiment, the battery box adopts the structural form of the first box and the second box, the structure thereof is simple, and the processing and manufacturing are simple.

In one embodiment, the second box is provided with a second connecting hole for the bolt to pass through.

By adopting the technical solution of this embodiment, the bolt and the threaded hole of the connecting member can be directly used for the second box to achieve the connection between the first box and the second box, so that no other connection structure needs to be provided, which is conducive to reducing parts, saving space, and increasing the volumetric energy density of the battery.

In one embodiment, the fixing portion is connected with a connecting portion, the connecting portion protrudes from a surface of the plate member facing the accommodating space, the connecting portion is located in the second box, and a sealing member is provided between the connecting portion and an inner wall of the second box.

By adopting the technical solution of this embodiment, the space between the connecting portion and the second box is filled with the sealing member. In this way, the sealing performance between the first box and the second box can be increased, improving the use reliability of the battery. In addition, the provision of the connecting portion can also increase the connection area between the first box and the second box, to facilitate the provision of the sealing member, thereby achieving a better sealing effect.

In one embodiment, two opposite side portions of the plate member along the second direction are provided with the fixing portion, the first direction intersecting with the second direction.

By adopting the technical solution of this embodiment, the fixing portions are provided on the two opposite side portions of the plate member, which can increase the connection points between the first box and the second box, improving the connection reliability between the first box and the second box, or increase the mounting points of the battery box, improving the mounting reliability of the battery.

In one embodiment, the first box further includes a first sealing plate and a second sealing plate, one side portion of two side portions of the plate member oppositely distributed along the third direction is connected with the first sealing plate, the other side portion of the two side portions of the plate member oppositely distributed along the third direction is connected with the second sealing plate, the first sealing plate, the second sealing plate, and the plate member jointly enclose the accommodating space, and the first direction, the second direction, and the third direction are pairwise perpendicular.

By adopting the technical solution of this embodiment, the structure of the first box is simple, and the processing and manufacturing are convenient.

In one embodiment, the first box further includes multiple mounting beams connected with the plate member, the multiple mounting beams are located between two mounting portions, the multiple mounting beams are spaced apart along the third direction, and the first direction, the second direction, and the third direction are pairwise perpendicular.

By adopting the technical solution of this embodiment, the provision of the multiple mounting beams can play a role in strengthening the structural strength of the plate member, improving the structural strength of the first box, which is conducive to improving the use reliability of the battery and the electric apparatus.

In one embodiment, the multiple mounting beams are located on a side portion of the plate member facing away from the accommodating space.

By adopting the technical solution of this embodiment, the mounting beams are located outside the accommodating space, and the mounting beams do not occupy the space of the accommodating space, such that the accommodating space can accommodate more battery cells, which is conducive to increasing the volumetric energy density of the battery.

In one embodiment, the first box further includes a first module beam and a second module beam for connecting with the battery cell, the first module beam and the second module beam are located in the accommodating space, the first module beam is connected with one side portion of the two side portions of the plate member oppositely distributed along the third direction, and the second module beam is connected with the other side portion of the two side portions of the plate member oppositely distributed along the third direction.

By adopting the technical solution of this embodiment, the first module beam and the second module beam are connected with the battery cell, such that the first module beam and the second module beam play a role in supporting and fixing the battery cell, which is conducive to improving the structural strength of the battery box and improving the use reliability of the battery.

In one embodiment, along the third direction, a first one of the mounting beams is disposed opposite to the first module beam, and/or a last one of the mounting beams is disposed opposite to the second module beam.

By adopting the technical solution of this embodiment, the structural strength of the first box can be improved, which is conducive to improving the use reliability of the battery.

In one embodiment, the plate member is a heat exchange member configured to exchange heat with the battery cell.

By adopting the technical solution of this embodiment, the heat exchange member is directly used as the plate member of the first box, so that no separate plate member needs to be provided, which can reduce parts, save space, and increase the volumetric energy density of the battery.

In one embodiment, the fixing portion is configured to connect with a mounting mating member through the bolt to achieve mounting of the battery box.

By adopting the technical solution of this embodiment, the fixing portion can serve as the mounting structure of the battery, the mounting of the battery is achieved through the bolt, and the mounting operation is simple, which is conducive to improving the mounting efficiency.

According to a second aspect, a battery is provided, including the battery box as described in the above embodiments.

According to a third aspect, an electric apparatus is provided, including the battery as described in the above embodiments.

The above description is only an overview of the technical solutions of the present application. In order to more clearly understand the technical means of the present application and to implement them in accordance with the contents of the specification, and in order to make the above and other purposes, features, and advantages of the present application more obvious and easier to understand, specific embodiments of the present application are specifically illustrated below.

### BRIEF DESCRIPTION OF DRAWINGS

In order to more clearly illustrate the technical solutions in the embodiments of the present application, the accompanying drawings to be used in the description of the embodiments or the prior art will be briefly introduced below. Obviously, the accompanying drawings in the following description are only some embodiments of the present application. For those of ordinary skill in the art, other accompanying drawings can also be obtained based on these accompanying drawings without creative efforts.
FIG. 1 is a schematic structural diagram of a vehicle according to one embodiment of the present application.
FIG. 2 is a first schematic structural diagram of a battery according to embodiment of the present application.
FIG. 3 is an exploded schematic diagram of the battery shown in FIG. 2.
FIG. 4 is a second schematic structural diagram of the battery shown in FIG. 2.
FIG. 5 is a cross-sectional view taken along line A-A in FIG. 4.
FIG. 6 is a partial enlarged view at B in FIG. 5.
FIG. 7 is a schematic structural diagram of the first box and the connecting member shown in FIG. 3.
FIG. 8 is a cross-sectional view taken along line C-C in FIG. 7.
FIG. 9 is a partial enlarged view at D in FIG. 8.
FIG. 10 is an exploded schematic diagram of the first box and the connecting member shown in FIG. 7.
FIG. 11 is a schematic structural diagram of the connecting member in FIG. 10.
FIG. 12 is a schematic structural diagram of a connecting member according to another embodiment of the present application.
FIG. 13 is a cross-sectional view taken along line E-E in FIG. 12.
FIG. 14 is a schematic structural diagram of a battery according to another embodiment of the present application.
FIG. 15 is a cross-sectional view taken along line F-F in FIG. 14.
FIG. 16 is a partial enlarged view at G in FIG. 15.
FIG. 17 is an exploded schematic diagram of a first box in FIG. 15.
FIG. 18 is a cross-sectional view of a plate member in FIG. 17.
FIG. 19 is a partial enlarged view at H in FIG. 18.

In the drawings, the reference numerals in each drawing are:
1000. vehicle; 1100. battery; 1200. controller; 1300. motor; 100. battery cell; 200. battery box; 201. accommodating space; 210. first box; 211. fixing portion; 2111. first connecting hole; 2112. mounting cavity; 212. connecting portion; 213. plate member; 2131. plate body portion; 2132. bent structure; 21321. first bent section; 21322. second bent section; 21323. third bent section; 21324. fourth bent section; 21325. fifth bent section; 2133. first bent portion; 2134. second bent portion; 214. side frame bar; 2141. frame body portion; 2142. side plate portion; 215. first sealing plate; 216. second sealing plate; 217. mounting beam; 218. first module beam; 219. second module beam; 220. connecting member; 221. threaded hole; 222. body; 223. protruding portion; 2211. first threaded hole section; 2212. second threaded hole section; 230. bolt; 240. second box; 241. second connecting hole; and 250. sealing member.

### DESCRIPTION OF EMBODIMENTS

In order to make the technical problems to be solved, the technical solutions, and the beneficial effects of the present application clearer, the present application will be further described in detail below with reference to the accompanying drawings and embodiments. It should be understood that the specific embodiments described herein are only used to explain the present application and are not used to limit the present application.

Unless otherwise defined, all technical and scientific terms used herein have the same meaning as commonly understood by one of ordinary skill in the art to which the present application belongs. The terms used herein are only for the purpose of describing specific embodiments and are not intended to limit the present application. The terms "include" and "have" and any variations thereof in the specification and claims of the present application and the above description of the drawings are intended to cover non-exclusive inclusions.

In the description of the embodiments of the present application, the technical terms "first", "second" and the like are only used to distinguish different objects, and should not be understood as indicating or implying relative importance or implicitly indicating the number, specific order, or primary and secondary relationship of the indicated technical features. Thus, features defined with "first" and "second" may explicitly or implicitly include one or more of these features.

As used herein, "embodiment" means that a particular feature, structure, or characteristic described in connection with the embodiment can be included in at least one embodiment of the present application. The appearances of the phrase in various places in the specification do not necessarily refer to the same embodiment, nor are separate or alternative embodiments mutually exclusive with other embodiments. Those of ordinary skill in the art will explicitly and implicitly understand that the embodiments described herein can be combined with other embodiments in any suitable manner.

In the description of the embodiments of the present application, the term "and/or" is merely an association describing associated objects, indicating that three relationships may exist, for example, A and/or B may indicate: A exists alone, A and B exist simultaneously, and B exists alone. In addition, the character "/" in this document generally indicates that the associated objects before and after are in an "or" relationship.

In the description of the embodiments of the present application, the term "multiple" refers to two or more (including two), and similarly, "multiple groups" refers to two or more groups (including two groups), and "multiple pieces" refers to two or more pieces (including two pieces). The meaning of "several" is one or more, unless otherwise clearly and specifically limited.

In the description of the embodiments of the present application, the orientation or positional relationship indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like is based on the orientation or positional relationship shown in the drawings, which is only for facilitating the description of the embodiments of the present application and simplifying the description, and does not indicate or imply that the referred means or element must have a specific orientation, be constructed and operated in a specific orientation, and therefore should not be construed as limiting the embodiments of the present application.

In the description of the embodiments of the present application, unless otherwise clearly specified and limited, the technical terms "mounting", "connecting", "join", "fixing" and the like should be understood in a broad sense. For example, they can be a fixed connection, a detachable connection, or an integral connection; they can also be a mechanical connection or an electrical connection; or they can be a direct connection or an indirect connection through an intermediary, or they can be the communication inside two elements or the interaction relationship between two elements. For those of ordinary skill in the art, the specific meanings of the above terms in the embodiments of the present application can be understood according to specific situations.

In the description of the embodiments of the present application, unless otherwise clearly specified and limited, when an element is referred to as being "fixed to" or "disposed on" another element, it can be directly on the other element or indirectly on the other element. When an element is referred to as being "connected to" another element, it can be directly connected to the other element or indirectly connected to the other element.

In the present application, a battery refers to a single physical module that includes one or more battery cells to provide higher voltage and capacity. For example, the battery mentioned in the present application may include a battery module, a battery pack, or the like. Some batteries may include a battery box for packaging one or more battery cells or multiple battery modules, and the battery box can prevent liquid or other foreign objects from affecting the charging or discharging of the battery cells or battery modules.

In the present application, the battery cell may include a lithium-ion secondary battery, a lithium-ion primary battery, a lithium-sulfur battery, a sodium-lithium ion battery, a sodium-ion battery, or a magnesium-ion battery, and the embodiments of the present application are not limited thereto. The battery cell may be in a cylindrical shape, a flat shape, a rectangular shape, or other shapes, and the embodiments of the present application are not limited thereto. Battery cells are generally divided into three types according to packaging methods: cylindrical battery cells, prismatic battery cells, and pouch battery cells, and the embodiments of the present application are not limited thereto.

Battery cells or battery modules are usually placed inside the battery box, and the size of the battery box directly determines the size of the battery. Therefore, how to reduce the size of the battery box is also an important research topic for batteries. Usually, the battery box includes a first box and a second box, the second box covers the first box, a fixing portion is provided on the outer side of the first box, and the fixing portion and the second box are connected through a bolt and a nut to enclose and form an accommodating space for accommodating battery cells. Alternatively, the battery includes a first box, a fixing portion is provided on the outer side of the first box, and the fixing portion is fixed to a mounting mating member (for example: a cross beam or a longitudinal beam of a vehicle) through a bolt and a nut to achieve mounting of the battery box.

However, the nut is a standard part, the size of the nut is a standard size, and the size of the nut also affects the size of the battery box. Therefore, how to optimize this part of the structure, reduce the size of the battery box, reduce the size of the battery, and increase the volumetric energy density of the battery is also an important research direction.

Based on this, the embodiments of the present application provide a battery box, in which a threaded hole is provided in the connecting member, and the threaded hole can be screwed with the bolt, such that the connecting member can replace the nut; at the same time, the connecting member can be made without following the size of the nut, that is, the size of the connecting member can be smaller than the size of the nut, thereby reducing the size of the battery box, reducing the size of the battery, and increasing the volumetric energy density of the battery.

The following embodiments are described by taking a vehicle as an example of an electric apparatus in one embodiment of the present application for convenience of explanation.

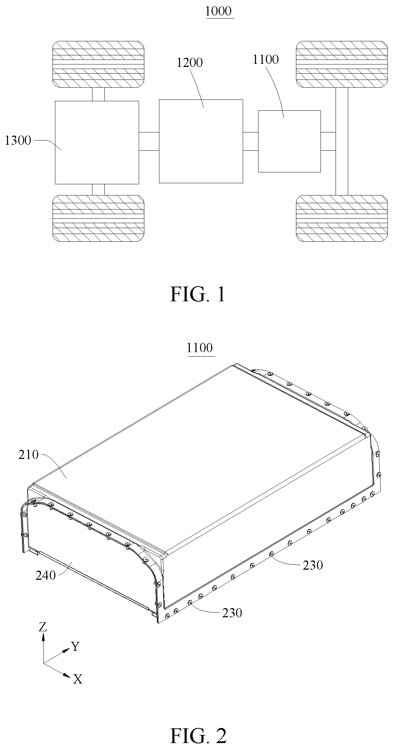

Referring to FIG. 1, FIG. 1 is a schematic structural diagram of a vehicle 1000 according to one embodiment of the present application.

The vehicle 1000 may be a fuel vehicle, a gas vehicle, or a new energy vehicle, and the new energy vehicle may be a pure electric automobile, a hybrid electric vehicle, a range-extended vehicle, or the like. A battery 1100 is provided inside the vehicle 1000, and the battery 1100 may be provided at the bottom, head, or tail of the vehicle 1000. The battery 1100 can be used for power supply of the vehicle 1000, for example, the battery 1100 can serve as an operating power source of the vehicle 1000. The vehicle 1000 may further include a controller 1200 and a motor 1300, and the controller 1200 is used to control the battery 1100 to supply power to the motor 1300, for example, for power needs during starting, navigation, and running of the vehicle 1000.

In one embodiment of the present application, the battery 1100 can not only serve as an operating power source of the vehicle 1000, but also as a driving power source of the vehicle 1000, replacing or partially replacing fuel or natural gas to provide driving power for the vehicle 1000.

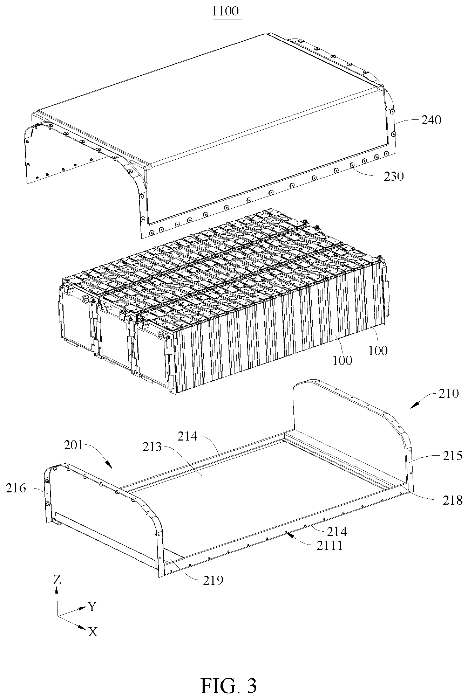

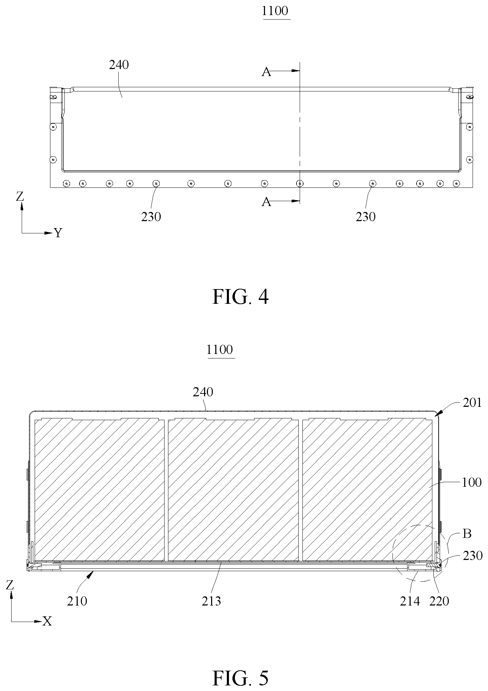

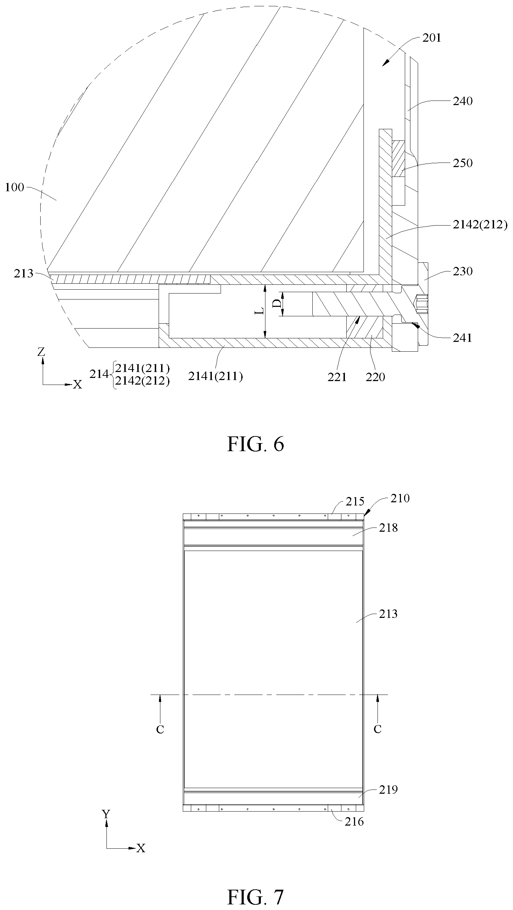

Referring to FIGs. 2 to 6, FIG. 2 is a first schematic structural diagram of a battery according to an embodiment of the present application. FIG. 3 is an exploded schematic diagram of the battery shown in FIG. 2. FIG. 4 is a second schematic structural diagram of the battery shown in FIG. 2. FIG. 5 is a cross-sectional view taken along line A-A in FIG. 4. FIG. 6 is a partial enlarged view at B in FIG. 5.

As one embodiment of the battery 1100, the battery 1100 includes a battery box 200 and a battery cell 100, and the battery cell 100 is accommodated in the battery box 200. The battery box 200 is configured to provide an accommodating space 201 for the battery cell 100.

In the battery 1100, multiple battery cells 100 can be provided, and the multiple battery cells 100 can be connected in series, in parallel, or in a combination thereof, where the combination connection refers to both series connection and parallel connection existing in the multiple battery cells 100.

In one embodiment, the multiple battery cells 100 can be directly connected in series, in parallel, or in a combination thereof, and then the whole formed by the multiple battery cells 100 is accommodated in the battery box 200. Certainly, the battery 1100 can also be formed by first connecting the multiple battery cells 100 in series, in parallel, or in a combination thereof to form a battery 1100 module, by connecting the multiple battery 1100 modules in series, in parallel, or in a combination thereof to form a whole, and by accommodating it in the box body. The battery 1100 may further include other structures, for example, the battery 1100 may further include a busbar component for achieving electrical connection between the multiple battery cells 100.

Each battery cell 100 can be a secondary battery or a primary battery; it can also be a lithium-sulfur battery, a sodium-ion battery, or a magnesium-ion battery, but is not limited thereto. The battery cell 100 can be in a cylindrical shape, a flat shape, a rectangular shape, or other shapes.

In one embodiment of the present application, a battery box 200 is provided, and the battery box 200 includes a first box 210 and a connecting member 220. The first box 210 is provided with an accommodating space 201 for accommodating the battery cell 100, a side portion of the first box 210 facing away from the accommodating space 201 is provided with a fixing portion 211, the fixing portion 211 is provided with a first connecting hole 2111, the connecting member 220 is provided with a threaded hole 221 for screwing with a bolt 230, and the first connecting hole 2111 communicates with the threaded hole 221 such that the bolt 230 passes through the first connecting hole 2111 and screws with the threaded hole 221.

The battery box 200 can adopt multiple structures.

In one embodiment, the battery box 200 can include a first box 210 and a second box 240, the first box 210 and the second box 240 fit with each other, and the first box 210 and the second box 240 jointly define an accommodating space 201 for accommodating the battery cell 100. The first box 210 can be a plate-like structure, the second box 240 can be a hollow structure with one end open, and the first box 210 covers the open side of the second box 240, such that the first box 210 and the second box 240 jointly define the accommodating space 201. Alternatively, the second box 240 can be a plate-like structure, the first box 210 can be a hollow structure with one end open, and the second box 240 covers the open side of the first box 210, such that the first box 210 and the second box 240 jointly define the accommodating space 201. Alternatively, the first box 210 and the second box 240 are both hollow structures with one end open, and the open side of the first box 210 and the open side of the second box 240 are butted to each other, such that the first box 210 and the second box 240 jointly define the accommodating space 201. Certainly, the battery box 200 formed by the first box 210 and the second box 240 can be in multiple shapes, such as a cylindrical shape or a rectangular shape.

In one embodiment, the battery box 200 may not include the second box 240, the accommodating space 201 is formed inside the first box 210, and the first box 210 can be directly fixed inside the electric apparatus through necessary structures.

The first box 210 can refer to an integral structure or a structure formed by splicing multiple independently formed sub-components.

The second box 240 can refer to an integral structure or a structure formed by splicing multiple independently formed sub-components.

The fixing portion 211 can refer to a portion of the first box 210 connected with the second box 240 through a screw, or a portion of the first box 210 connected with a mounting mating member (for example: a cross beam or a longitudinal beam of the vehicle 1000) through a screw. The fixing portion 211 is located on a side portion of the first box 210 facing away from the accommodating space 201, that is, the fixing portion 211 is located outside the battery box 200 to facilitate connection.

The first connecting hole 2111 can refer to a hole structure of the fixing portion 211 for the bolt 230 to pass through.

The connecting member 220 can refer to a component that engages with the bolt 230 for connection. The connecting member 220 is provided with a threaded hole 221, and the threaded hole 221 can refer to a hole structure with threads on the inner wall of the hole. The threaded hole 221 and the first connecting hole 2111 are oppositely disposed, that is, the threaded hole 221 and the first connecting hole 2111 are coaxially disposed, such that after the screw passes through the first connecting hole 2111, it can screw with the threaded hole 221, thereby achieving connection.

As an example, in the case where the fixing portion 211 is connected with the second box 240, the second box 240 is provided with a second connecting hole 241, and after the screw passes through the first connecting hole 2111 and the second connecting hole 241, it screws with the threaded hole 221 of the connecting member 220 to achieve fixed connection between the first box 210 and the second box 240.

As an example, in the case where the fixing portion 211 is connected with a mounting mating member (for example: a cross beam or a longitudinal beam of the vehicle 1000), the mounting mating member is provided with a third connecting hole, and after the screw passes through the first connecting hole 2111 and the third connecting hole, it screws with the threaded hole 221 of the connecting member 220, achieving the mounting of the battery box 200.

In the battery box 200 of the embodiments of the present application, the connecting member 220 is provided with a threaded hole 221 that engages with the bolt 230, such that the connecting member 220 can replace a nut to connect with the bolt 230. At the same time, the connecting member 220 can also be designed without following the standard size of the nut, that is, the size of the connecting member 220 can be designed to be smaller than the standard size of the nut, saving space on the side of the first box 210 facing the fixing portion 211, thereby reducing the size of the battery box 200, reducing the size of the battery 1100, and increasing the volumetric energy density of the battery 1100.

In another embodiment of the present application, the connecting member 220 is a steel member, an aluminum alloy member, or a copper alloy member.

In one embodiment, the connecting member 220 is a steel member, that is, the connecting member 220 is made of steel, where the material of the connecting member 220 can be, but is not limited to, carbon steel (for example: 45 steel, Q345) and stainless steel (for example: SUS304, SUS316). Steel has good structural strength, so on the basis of satisfying the connection strength between the bolt 230 and the connecting member 220, the size of the connecting member 220 can be made smaller, further saving the space occupied by the first box 210, reducing the size of the battery box 200, and increasing the volumetric energy density of the battery 1100.

In one embodiment, the connecting member 220 is an aluminum alloy member, that is, the connecting member 220 is made of aluminum alloy, for example: 6061 aluminum alloy, 7075 aluminum alloy, or 2024 aluminum alloy. Aluminum alloy has good structural strength, so on the basis of satisfying the connection strength between the bolt 230 and the connecting member 220, the size of the connecting member 220 can be made smaller, further saving the space occupied by the first box 210, reducing the size of the battery box 200, and increasing the volumetric energy density of the battery 1100.

In one embodiment, the connecting member 220 is a copper alloy member, that is, the connecting member 220 is made of copper alloy, for example: brass, bronze, cupronickel, or structural copper alloy (for example: T2Y2). Copper alloy has good structural strength, so on the basis of satisfying the connection strength between the bolt 230 and the connecting member 220, the size of the connecting member 220 can be made smaller, further saving the space occupied by the first box 210, reducing the size of the battery box 200, and increasing the volumetric energy density of the battery 1100.

By adopting the technical solution of this embodiment, on the basis of satisfying the connection strength between the bolt 230 and the connecting member 220, the size of the connecting member 220 can be made smaller, further saving the space occupied by the first box 210, reducing the size of the battery box 200, and increasing the volumetric energy density of the battery 1100.

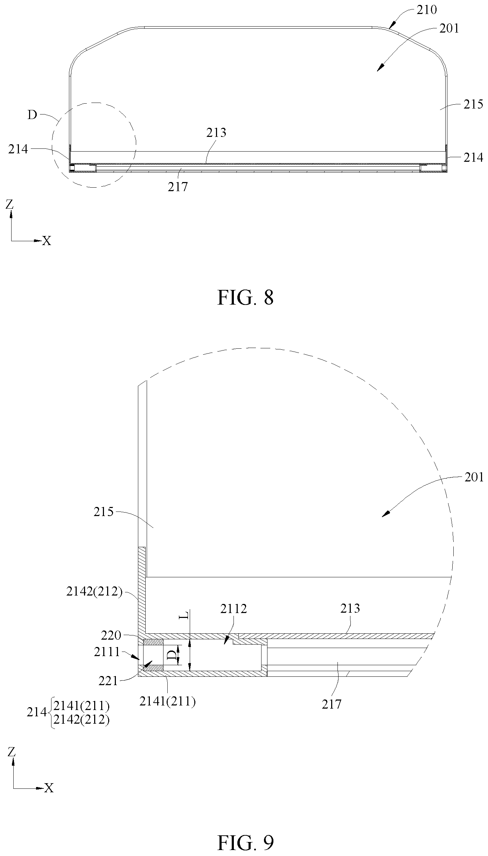

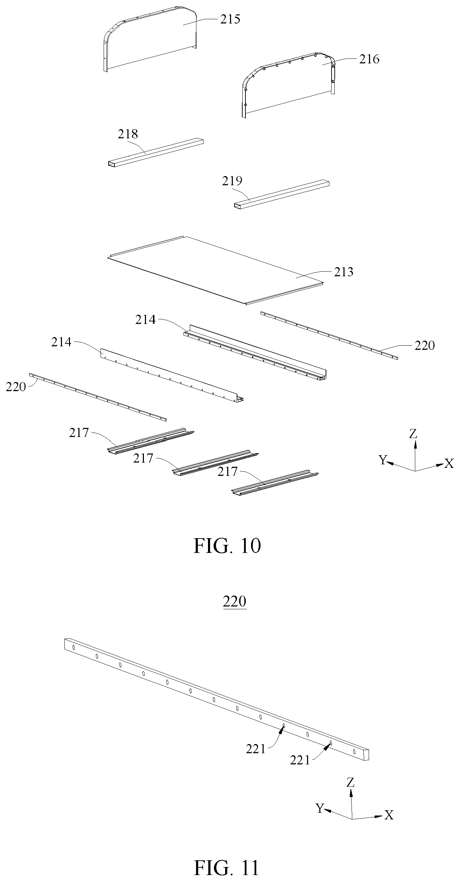

Referring to FIGs. 7 to 10 together, FIG. 7 is a schematic structural diagram of the first box and the connecting member shown in FIG. 3. FIG. 8 is a cross-sectional view taken along line C-C in FIG. 7. FIG. 9 is a partial enlarged view at D in FIG. 8. FIG. 10 is an exploded schematic diagram of the first box and the connecting member shown in FIG. 7.

In another embodiment of the present application, the accommodating space 201 and the fixing portion 211 are respectively located on two opposite sides of the first box 210 along a first direction Z.

The first direction Z can refer to the distribution direction of the accommodating space 201 and the fixing portion 211. The accommodating space 201 is located on one side of the first box 210 along the first direction Z, and the fixing portion 211 is located on the other side of the first box 210 along the first direction Z.

By adopting the technical solution of this embodiment, the size L of the connecting member 220 in the first direction Z can be designed to be smaller, saving space in the first direction Z, such that the battery 1100 can be applied to an electric apparatus with stricter requirements on the size in the first direction Z.

In some embodiments, the size of the battery 1100 along the first direction Z is smaller than the size of the battery 1100 along a second direction X, and the size of the battery 1100 along the first direction Z is greater than the size of the battery 1100 along a third direction Y. Optionally, the first direction Z, the second direction X, and the third direction Y are pairwise perpendicular; as an example, the first direction Z can be the height direction of the battery 1100, the second direction X can be the width direction of the battery 1100, and the third direction Y can be the length direction of the battery 1100.

The first direction Z being the height direction of the battery 1100 can save space in the height direction of the battery 1100, making the battery 1100 adaptable to battery 1100 packs or electric apparatuses with strict size requirements in the height direction.

In another embodiment of the present application, an axis of the first connecting hole 2111 is parallel to the second direction X, and the first direction Z is perpendicular to the second direction X.

By adopting the technical solution of this embodiment, the bolt 230 passes through the first connecting hole 2111 along the second direction X and then screws with the threaded hole 221; and the second direction X is perpendicular to the first direction Z, and the bolt 230 can be mounted on other sides of the first box 210 along the first direction Z, facilitating the mounting of the bolt 230.

In one embodiment, the first direction Z is the height direction of the battery 1100, the second direction X is the width direction of the battery 1100, the bolt 230 is mounted from a side portion of the battery 1100 along the width direction, and the mounting operation is simple and convenient.

In another embodiment of the present application, a nominal diameter of the threaded hole 221 is D, and a size of the connecting member 220 in the first direction Z is L, where 1.1 ≤ L/D ≤ 2.

The nominal diameter D of the threaded hole 221 can refer to the maximum diameter of the thread. The nominal diameter D of the threaded hole 221 can be measured by a thread gauge. A thread gauge is a tool specifically used for measuring the diameter of the threaded hole 221, and usually has multiple specifications to choose from. When used, the thread gauge is screwed into the threaded hole 221 to ensure free rotation, and attention is paid to the contact between the end of the thread gauge and the bottom of the hole. The nominal diameter D of the threaded hole 221 can be obtained according to the size of the thread gauge.

The size L of the connecting member 220 in the first direction Z can refer to the spacing between two opposite end surfaces of the connecting member 220 in the first direction Z. If the end surface of the connecting member 220 along the first direction Z is a plane, it is measured based on this plane. If the end surface of the connecting member 220 along the first direction Z is formed with a protrusion and/or a recess, it is measured based on the planar area of the end surface of the connecting member 220 along the first direction Z.

In the case where the bolt 230 passes through the first connecting hole 2111 along the second direction X and then screws with the nut, the maximum size of the nut in the first direction Z is equal to the opposite side size of the nut. However, the ratio of the opposite side size of the nut to the nominal diameter D of the threaded hole 221 of the nut is usually greater than 2, and the nut needs to occupy a larger space on the side portion of the first box 210 along the first direction Z.

1.1 ≤ L/D ≤ 2, and it can be understood that when L/D ≥ 1.1, the side portion of the connecting member 220 along the first direction Z has a certain structural strength, thereby satisfying the connection requirement; when L/D ≤ 2, the size of the connecting member 220 in the first direction Z is smaller than the size of the nut in the first direction Z, achieving a space-saving effect and reducing the size of the first box 210.

By adopting the technical solution of this embodiment, the design of 1.1 ≤ L/D ≤ 2 can ensure both the connection reliability of the connecting member 220 and the space-saving effect, improving the use reliability of the battery 1100 and the volumetric energy density.

In another embodiment of the present application, 1.2 ≤ L/D ≤ 1.7.

When L/D ≥ 1.2, the side portion of the connecting member 220 along the first direction Z has better structural strength, and the connection reliability of the connecting member 220 is better. When L/D ≤ 1.7, the size of the connecting member 220 in the first direction Z is much smaller than the size of the nut in the first direction Z, the space-saving effect is better, and more size of the first box 210 can be reduced.

By adopting the technical solution of this embodiment, the design of 1.2 ≤ L/D ≤ 1.7 can better ensure both the connection reliability of the connecting member 220 and the space-saving effect, better improving the use reliability of the battery 1100 and the volumetric energy density.

In one embodiment, the value of L/D can be, but is not limited to, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, and 2.

Referring to FIG. 11 together, FIG. 11 is a schematic structural diagram of the connecting member in FIG. 10.

In another embodiment of the present application, the connecting member 220 is an elongated structure extending along the third direction Y, and the first direction Z, the second direction X, and the third direction Y are pairwise perpendicular.

The connecting member 220 extends along the third direction Y, the size of the connecting member 220 in the third direction Y is greater than the size L of the connecting member 220 in the first direction Z, and the size of the connecting member 220 in the third direction Y is greater than the size of the connecting member 220 in the second direction X. In one embodiment, the third direction Y can be the length direction of the connecting member 220, the second direction X can be the width direction of the connecting member 220, and the first direction Z can be the height direction of the connecting member 220.

By adopting the technical solution of this embodiment, the connecting member 220 has an elongated structure, such that the connecting member 220 has a larger size in the third direction Y, and the structural reliability of the connecting member 220 is good, improving the reliability of connection with the bolt 230. In addition, multiple holes of the bolt 230 can be provided on the connecting member 220 in the third direction Y to improve the reliability of connection with the second box 240 or the mounting mating member.

In another embodiment of the present application, multiple threaded holes 221 are provided, and the multiple threaded holes 221 are spaced apart along the third direction Y.

The number of the threaded holes 221 can be, but is not limited to, two, three, four, and five.

By adopting the technical solution of this embodiment, the connecting member 220 can be screwed with the multiple threaded holes 221 through multiple bolts 230, which can achieve multi-point connection between the first box 210 and the second box 240 or multi-point connection between the first box 210 and the mounting mating member, improving the connection reliability and improving the use reliability of the battery 1100.

In another embodiment of the present application, the fixing portion 211 is configured with a mounting cavity 2112 for communication with the first connecting hole 2111, and the connecting member 220 is located in the mounting cavity 2112.

The fixing portion 211 is a hollow structure, the cavity inside the fixing portion 211 forms the mounting cavity 2112, and the mounting cavity 2112 can provide mounting space for the connecting member 220.

By adopting the technical solution of this embodiment, the connecting member 220 is located in the mounting cavity 2112 of the fixing portion 211, which can fully utilize the space inside the fixing portion 211, facilitating reduction of the size of the first box 210 and increasing the volumetric energy density of the battery 1100. In addition, the fixing portion 211 can also protect the connecting member 220, improving the connection reliability.

In another embodiment of the present application, the connecting member 220 is bonded to a cavity wall surface of the mounting cavity 2112.

The connecting member 220 is bonded to the cavity wall surface of the mounting cavity 2112 through structural adhesive. The structural adhesive can be, but is not limited to, epoxy resin structural adhesive, polyurethane structural adhesive, acrylic structural adhesive, and silicone structural adhesive.

In one embodiment, the connecting member 220 can be bonded to the cavity wall surface provided with the first connecting hole 2111. Certainly, in other embodiments, it can also be bonded to other surfaces of the mounting cavity 2112.

By adopting the technical solution of this embodiment, the connecting member 220 is fixed in the mounting cavity 2112 by means of bonding. In this way, the positioning of the connecting member 220 is achieved, and the screwing operation of the bolt 230 and the threaded hole 221 is simpler and faster. Additionally, the bonding fixing method has simple fixing operation, which is conducive to improving the assembly efficiency.

In another embodiment of the present application, at least one of two opposite surfaces of the connecting member 220 along the first direction Z abuts against the cavity wall surface of the mounting cavity 2112.

One surface of the connecting member 220 along the first direction Z abuts against the cavity wall surface of the mounting cavity 2112; or, the other surface of the connecting member 220 along the first direction Z abuts against the cavity of the mounting cavity 2112; or, the two opposite surfaces of the connecting member 220 along the first direction Z abut against the cavity wall surface of the mounting cavity 2112.

By adopting the technical solution of this embodiment, at least one of the two opposite surfaces of the connecting member 220 along the first direction Z abuts against the cavity wall surface of the mounting cavity 2112, which can save the space of the mounting cavity 2112 in the first direction Z, reduce the size of the first box 210 in the first direction Z, reduce the size of the battery 1100 in the first direction Z, and increase the volumetric energy density of the battery 1100.

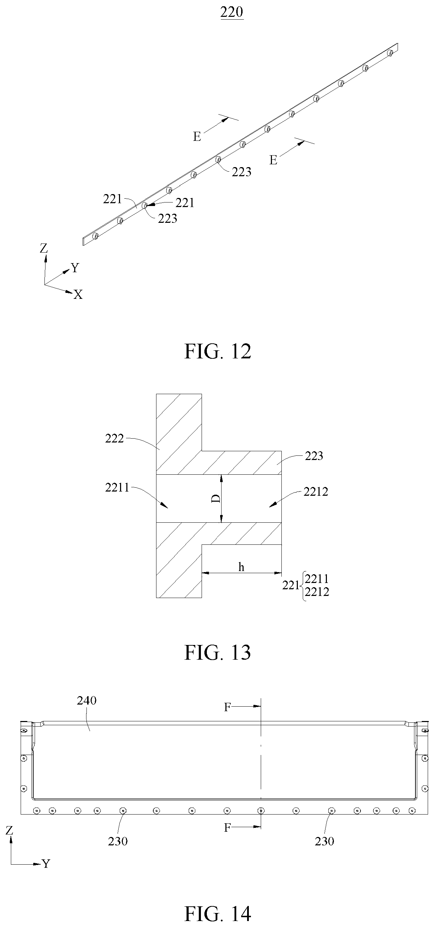

Referring to FIGs. 12 and 13, FIG. 12 is a schematic structural diagram of a connecting member according to another embodiment of the present application. FIG. 13 is a cross-sectional view taken along line E-E in FIG. 12.

In another embodiment of the present application, the threaded hole 221 includes a first threaded hole section 2211 and a second threaded hole section 2212 in communication with each other. The connecting member 220 includes a body 222 and a protruding portion 223 that are connected, the protruding portion 223 protrudes from a surface of the body 222, the body 222 is configured with the first threaded hole section 2211, and the protruding portion 223 is configured with the second threaded hole section 2212.

The threaded hole 221 is divided into two sections along the axial direction, one section being the first threaded hole section 2211 and the other section being the second threaded hole section 2212. The connecting member 220 is also divided into two parts along the axial direction of the threaded hole 221, one part being the body 222 and the other part being the protruding portion 223, and the protruding portion 223 protruding from the surface of the body 222. The first threaded hole section 2211 is located in the body 222, the second threaded hole section 2212 is located in the protruding portion 223, the protruding portion 223 surrounds the second threaded hole section 2212, and the shape of the protruding portion 223 can be multiple, for example: circular, elliptical, or quadrilateral. In one embodiment, the protruding portion 223 can be located on a side of the body 222 facing away from the first connecting hole 2111, the protruding portion 223 protrudes from a surface of the body 222 facing the first connecting hole 2111, the first threaded hole section 2211 penetrates the body 222 along the second direction X, and the second threaded hole section 2212 can penetrate the protruding portion 223 along the second direction X or not penetrate the protruding portion 223 along the second direction X. In one embodiment, the protruding portion 223 can also be located on a side of the body 222 facing away from the first connecting hole 2111, the protruding portion 223 protrudes from a surface of the body 222 facing the first connecting hole 2111, the second threaded hole section 2212 penetrates the protruding portion 223 along the second direction X, and the first threaded hole section 2211 can penetrate the body 222 along the second direction X or not penetrate the body 222 along the second direction X.

In one embodiment, in the case where the connecting member 220 is provided with multiple threaded holes 221, the body 222 has an elongated structure, multiple protruding portions 223 are provided, and the multiple protruding portions 223 are provided in one-to-one correspondence with the threaded holes 221.

By adopting the technical solution of this embodiment, the provision of the protruding portion 223 can reduce material accumulation of the connecting member 220, which is conducive to achieving a lightweight design.

In another embodiment of the present application, a height of the protruding portion 223 protruding from the body 222 is h, a nominal diameter of the threaded hole 221 is D, and 0.5 ≤ h/D ≤ 2.

The height h of the protruding portion 223 protruding from the body 222 can refer to the spacing between a surface of the protruding portion 223 facing away from the body 222 and a surface of the body 222 facing the protruding portion 223.

0.5 ≤ h/D ≤ 2, and it can be understood that when h/D ≥ 0.5, the height h of the protruding portion 223 protruding from the body 222 is reasonable, the protruding portion 223 is not easily damaged, and the structural strength of the connecting member 220 is good; and when h/D ≤ 2, the height h of the protruding portion 223 protruding from the body 222 is not too large to cause the size of the battery box 200 to be too large.

By adopting the technical solution of the embodiment, the design of 0.5 ≤ h/D ≤ 2 enables the connecting member 220 to ensure both the connection reliability and the size of the battery box 200.

In another embodiment of the present application, 0.7 ≤ h/D ≤ 1.5.

0.7 ≤ h/D ≤ 1.5, and it can be understood that when h/D ≥ 0.7, the height h of the protruding portion 223 protruding from the body 222 is more reasonable, the protruding portion 223 is less likely to be damaged, and the structural strength of the connecting member 220 is better; and when h/D ≤ 1.5, the height h of the protruding portion 223 protruding from the body 222 is more reasonable, and the size of the battery box 200 is also more reasonable.

By adopting the technical solution of the embodiment, the design of 0.7 ≤ h/D ≤ 1.5 enables the connecting member 220 to better ensure both the connection reliability and the size of the battery box 200.

The value of h/D can be, but is not limited to, 0.5, 0.6, 0.7, 0.8, 0.9, 1, 1.1, 1.2, 1.3, 1.4, 1.5, 1.6, 1.7, 1.8, 1.9, and 2.

In another embodiment of the present application, a height of the protruding portion 223 protruding from the body 222 is h, and 0.5 millimeter (mm) ≤ h/D ≤ 50 mm.

0.5 mm ≤ h/D ≤ 50 mm, and it can be understood that when h ≥ 0.5 mm, the height h of the protruding portion 223 protruding from the body 222 is reasonable, the protruding portion 223 is not easily damaged, and the structural strength of the connecting member 220 is good; and when h ≤ 50 mm, the height h of the protruding portion 223 protruding from the body 222 is not too large to cause the size of the battery box 200 to be too large.

By adopting the technical solution of the embodiment, the design of 0.5 mm ≤ h/D ≤ 50 mm enables the connecting member 220 to ensure both the connection reliability and the size of the battery box 200.

In another embodiment of the present application, 5 mm ≤ h/D ≤ 30 mm.

5 mm ≤ h/D ≤ 30 mm, and it can be understood that when h ≥ 5 mm, the height h of the protruding portion 223 protruding from the body 222 is more reasonable, the protruding portion 223 is less likely to be damaged, and the structural strength of the connecting member 220 is better; and when h ≤ 30 mm, the height h of the protruding portion 223 protruding from the body 222 is more reasonable, and the size of the battery box 200 is also more reasonable.

By adopting the technical solution of the embodiment, the design of 5 mm ≤ h/D ≤ 30 mm enables the connecting member 220 to better ensure both the connection reliability and the size of the battery box 200.

The value of h can be, but is not limited to, 0.5 mm, 1 mm, 5 mm, 10 mm, 15 mm, 20 mm, 25 mm, 30 mm, 35 mm, 40 mm, 45 mm, and 50 mm.

In another embodiment of the present application, the first box 210 further includes a side frame bar 214, the side frame bar 214 is connected with a side portion of the plate member 213, and at least part of the side frame bar 214 forms the fixing portion 211.

The side frame bar 214 can refer to a component connected to the side portion of the plate member 213; and the side frame bar 214 can be made of metal materials such as aluminum alloy and copper alloy.

A portion of the side frame bar 214 located on a side portion of the plate member 213 facing away from the accommodating space 201 is the fixing portion 211.

The side frame bar 214 can be partially located on a side portion of the plate member 213 facing away from the accommodating space 201. As an example, the side frame bar 214 includes a frame body portion 2141 and a side plate portion 2142, one side of the frame body portion 2141 is connected with the side portion of the plate member 213, the side plate portion 2142 is connected with the other side of the frame body portion 2141, and the side plate portion 2142 protrudes from a side portion of the plate body facing the accommodating space 201. The frame body portion 2141 is a hollow structure, the hollow cavity of the frame body portion 2141 is the mounting cavity 2112, and a side wall of the frame body portion 2141 facing away from the plate member 213 is provided with the first connecting hole 2111.

The side frame bar 214 can also be entirely located on a side portion of the accommodating space 201.

By adopting the technical solution of this embodiment, the side frame bar 214 has good structural strength, which is conducive to improving the connection reliability between the first box 210 and the second box 240 or improving the connection reliability between the first box 210 and the mounting mating member.

In another embodiment of the present application, the battery box 200 further includes a second box 240, the second box 240 is connected with the fixing portion 211, and the first box 210 and the second box 240 enclose the accommodating space 201.

By adopting the technical solution of this embodiment, the battery box 200 adopts the structural form of the first box 210 and the second box 240, the structure thereof is simple, and the processing and manufacturing are simple.

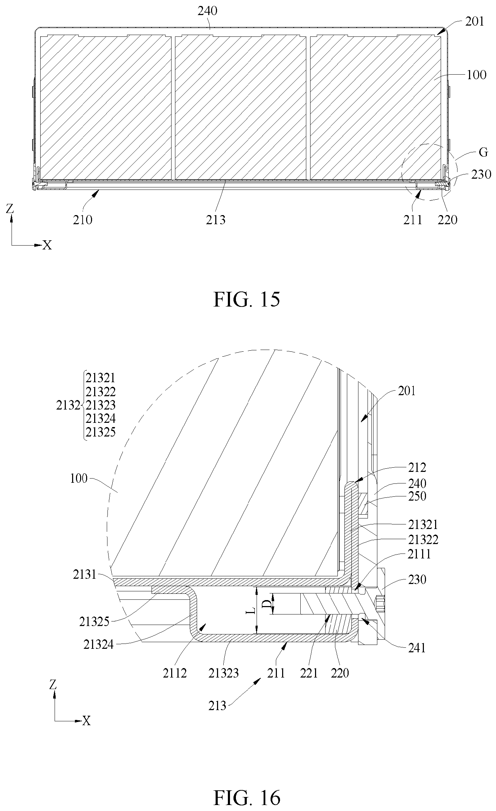

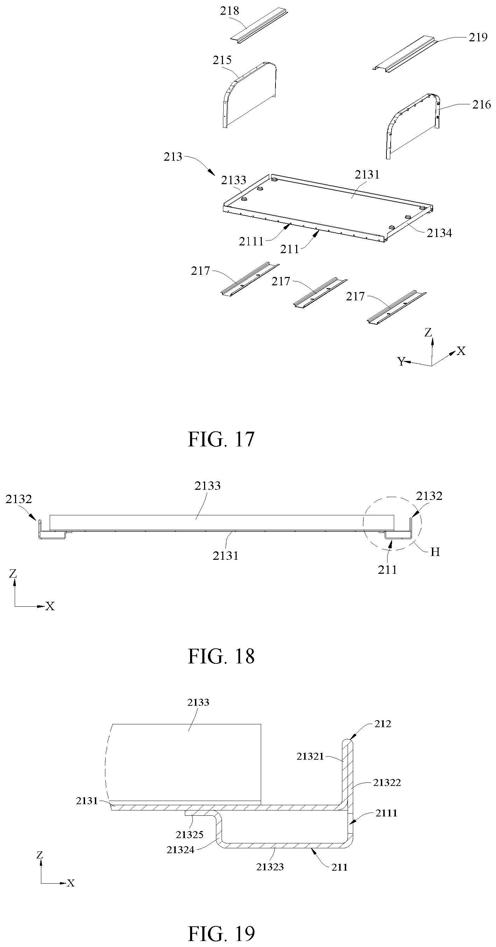

Referring to FIGs. 14 to 19, FIG. 14 is a schematic structural diagram of a battery according to another embodiment of the present application. FIG. 15 is a cross-sectional view taken along line F-F in FIG. 14. FIG. 16 is a partial enlarged view at G in FIG. 15. FIG. 17 is an exploded schematic diagram of the first box in FIG. 15. FIG. 18 is a cross-sectional view of the plate member in FIG. 17. FIG. 19 is a partial enlarged view at H in FIG. 18.

In another embodiment of the present application, the first box 210 includes a plate member 213, and the accommodating space 201 and the fixing portion 211 are respectively located on two opposite side portions of the plate member 213 along the first direction Z; a side portion of the plate member 213 is bent to form a bent structure 2132, and at least part of the bent structure 2132 forms the fixing portion 211.

The plate member 213 can refer to a plate-like component in the first box 210; and the accommodating space 201 and the fixing portion 211 are located on two opposite side portions of the plate member 213 along the first direction Z. In one embodiment, the accommodating space 201 is located above the plate member 213, the fixing portion 211 is located on a lower side portion of the plate member 213, the plate member 213 supports the battery cell 100, and the plate member 213 can be a bottom plate of the battery 1100. In one embodiment, the accommodating space 201 is located below the plate member 213, the fixing portion 211 is located on an upper side portion of the plate member 213, the plate member 213 is located above the battery cell 100, and the plate member 213 can be a top plate of the battery box 200.

A side portion of the plate member 213 is bent to form a bent structure, and a portion of the bent structure located on a side portion of the plate member 213 facing away from the accommodating space 201 is the fixing portion 211.

The bent structure can be partially located on a side portion of the plate member 213 facing away from the accommodating space 201. As an example, the side portion of the plate member 213 is bent such that the plate member 213 forms a plate body portion 2131 and a bent structure. The bent structure includes a first bent section 21321, a second bent section 21322, a third bent section 21323, a fourth bent section 21324, and a fifth bent section 21325 that are sequentially connected. The first bent section 21321 is bent from the side portion of the plate body portion 2131 toward the accommodating space 201, and the first bent section 21321 is perpendicular to the plate body portion 2131. The second bent section 21322 is attached to the first bent section 21321, and the second bent section 21322 is located on a side portion of the first bent section 21321 facing away from the plate body portion 2131. The third bent section 21323 is parallel to the plate body portion 2131, the third bent section 21323 is spaced apart from a surface of the plate body portion 2131 facing away from the accommodating space 201, and the third bent section 21323 is parallel and spaced apart from the fourth bent section 21324. The fifth bent section 21325 is attached to a surface of the plate body portion 2131 facing away from the accommodating space 201, where a portion of the second bent section 21322 located on a side of the plate body portion 2131 facing away from the accommodating space 201, the third bent section 21323, the fourth bent section 21324, and the fifth bent section 21325 form the fixing portion 211, a surface of the plate body portion 2131 facing away from the accommodating space 201, a portion of the second bent section 21322 located on a side of the plate body portion 2131 facing away from the accommodating space 201, the third bent section 21323, and the fourth bent section 21324 jointly enclose the mounting cavity 2112, and the first connecting hole 2111 is provided in a portion of the second bent section 21322 located on a side of the plate body portion 2131 facing away from the accommodating space 201.

The bent structure can also be entirely located on a side portion of the plate member 213 facing away from the accommodating space 201. As an example, the side portion of the plate member 213 is directly bent facing away from the accommodating space 201 to form the fixing portion 211. Certainly, the plate member 213 can also have other bending methods in the bent structure on a side portion of the plate member 213 facing away from the accommodating space 201, which is not limited herein.

By adopting the technical solution of this embodiment, the plate member 213 adopts a bending method to make the fixing portion 211. In this way, no connection structure needs to be provided, which can reduce parts and save space, conducive to increasing the volumetric energy density of the battery 1100. At the same time, the bending radius of the bending method can be set smaller, which is also conducive to saving space and further increasing the volumetric energy density of the battery 1100. Additionally, the bending manufacturing process is simple, conducive to improving the production efficiency of the battery 1100.

In another embodiment of the present application, the second box 240 is provided with a second connecting hole 241 for the bolt 230 to pass through.

The second connecting hole 241 can refer to a hole structure of the second box 240 for the bolt 230 to pass through. After the bolt 230 passes through the second connecting hole 241 and the first connecting hole 2111, it screws with the hole of the bolt 230 of the connecting member 220, achieving the connection between the first box 210 and the second box 240.

By adopting the technical solution of this embodiment, the bolt 230 and the threaded hole 221 of the connecting member 220 can be directly used for the second box 240 to achieve the connection between the first box 210 and the second box 240, so that no other connection structure needs to be provided, which is conducive to reducing parts, saving space, and increasing the volumetric energy density of the battery 1100.

In another embodiment of the present application, the fixing portion 211 is connected with a connecting portion 212, the connecting portion 212 protrudes from a surface of the plate member 213 facing the accommodating space 201, the connecting portion 212 is located in the second box 240, and a sealing member 250 is provided between the connecting portion 212 and an inner wall of the second box 240.

The connecting portion 212 can refer to a portion of the first box 210 protruding from the plate member 213 toward the accommodating space 201, that is, the connecting portion 212 is inserted into the second box 240. In one embodiment, referring to FIG. 16, the connecting portion 212 can refer to a portion of the first bent section 21321 and the second bent section 21322 described above located on a side of the plate body portion 2131 facing the accommodating space 201. In one embodiment, referring to FIG. 6, the connecting portion 212 can also refer to the side plate portion 2142 described above.

The sealing member 250 is a mechanical component used to prevent gas or liquid leakage. The sealing member 250 can have multiple types, for example: O-ring, gasket, sealant, or sealing strip.

By adopting the technical solution of this embodiment, the space between the connecting portion 212 and the second box 240 is filled with the sealing member 250. In this way, the sealing performance between the first box 210 and the second box 240 can be increased, improving the use reliability of the battery 1100. In addition, the provision of the connecting portion 212 can also increase the connection area between the first box 210 and the second box 240, to facilitate the provision of the sealing member 250, thereby achieving a better sealing effect.

In another embodiment of the present application, two opposite side portions of the plate member 213 along the second direction X are provided with the fixing portion 211, the first direction Z intersecting with the second direction X.

Exemplarily, the second direction X can refer to the width direction of the plate member 213, and the two opposite side portions of the plate member 213 along the width direction are bent to obtain two first bent portions.

By adopting the technical solution of this embodiment, the fixing portions 211 are provided on the two opposite side portions of the plate member 213, which can increase the connection points between the first box 210 and the second box 240, improving the connection reliability between the first box 210 and the second box 240, or increase the mounting points of the battery box 200, improving the mounting reliability of the battery 1100.

In another embodiment of the present application, the first box 210 further includes a first sealing plate 215 and a second sealing plate 216, one side portion of two side portions of the plate member 213 oppositely distributed along the third direction Y is connected with the first sealing plate 215, the other side portion of the two side portions of the plate member 213 oppositely distributed along the third direction Y is connected with the second sealing plate 216, the first sealing plate 215, the second sealing plate 216, and the plate member 213 jointly enclose the accommodating space 201, and the first direction Z, the second direction X, and the third direction Y are pairwise perpendicular.

The first sealing plate 215 and the second sealing plate 216 are located on two opposite side portions of the plate member 213 along the third direction Y, the first sealing plate 215, the second sealing plate 216, and the plate member 213 form a U-shaped structure, and the second box 240 covers the open side of the U-shaped structure, thereby enclosing the accommodating space 201. The second box 240 also has a U-shaped structure to match the structure of the first box 210, two opposite side walls of the second box 240 are respectively connected with the two fixing portions 211 through the bolt 230, the first sealing plate 215 and the second sealing plate 216 cover two opposite openings of the second box 240 along the third direction Y, and the first box 210 and the second box 240 jointly enclose the accommodating space 201.

By adopting the technical solution of this embodiment, the structure of the first box 210 is simple, and the processing and manufacturing are convenient.

In one embodiment, the two opposite side portions of the plate member 213 along the third direction Y are bent to form a first bent portion 2133 and a second bent portion 2134, the first bent portion 2133 and the second bent portion 2134 are located on a side portion of the plate member 213 facing the accommodating space 201, the first sealing plate 215 is welded with the first bent portion 2133, and the second sealing plate 216 is welded with the fourth sealing plate, thereby achieving sealed connection between the first sealing plate 215, the second sealing plate 216, and the plate member 213. In addition, during the welding process, the first sealing plate 215 can be inserted into a notch between the fixing portion 211 and the first bent portion 2133 for pre-positioning, to facilitate subsequent welding connection. Similarly, the second sealing plate 216 can be inserted into a notch between the fixing portion 211 and the second bent portion 2134 for pre-positioning, to facilitate subsequent welding connection.

In one embodiment, the first bent portion 2133 is located on a side portion of the plate member 213 facing away from the accommodating space 201, the second bent portion 2134 is located on a side portion of the plate member 213 facing the accommodating space 201, the first sealing plate 215 is welded with the first bent portion 2133, and the second sealing plate 216 is welded with the fourth sealing plate, thereby achieving sealed connection between the first sealing plate 215, the second sealing plate 216, and the plate member 213. During the welding process, the first sealing plate 215 is attached to the wall surface of the first bent portion 2133 for pre-positioning, to facilitate subsequent welding connection. Similarly, the second sealing plate 216 can be inserted into a notch between the fixing portion 211 and the second bent portion 2134 for pre-positioning, to facilitate subsequent welding connection.

In another embodiment of the present application, the first box 210 further includes multiple mounting beams 217 connected with the plate member 213, the multiple mounting beams 217 are located between two mounting portions, the multiple mounting beams 217 are spaced apart along the third direction Y, and the first direction Z, the second direction X, and the third direction Y are pairwise perpendicular.

The mounting beam 217 can refer to a beam connected with the plate member 213 and spaced apart along the third direction Y, and the mounting beam 217 can be used for fixing on the mounting mating member to achieve mounting of the battery 1100. The number of the mounting beams 217 can be, but is not limited to, two, three, four, and five. Exemplarily, the mounting beams 217 extend along the first direction Z, and three mounting beams 217 are spaced apart along the second direction X. The multiple mounting beams 217 can adopt equal spacing arrangement or unequal spacing arrangement, which can be specifically set according to actual needs. Certainly, in other embodiments, the mounting beams 217 can also extend along other directions.

By adopting the technical solution of this embodiment, the provision of the multiple mounting beams 217 can play a role in strengthening the structural strength of the plate member 213, improving the structural strength of the first box 210, which is conducive to improving the use reliability of the battery 1100 and the electric apparatus.

In another embodiment of the present application, the multiple mounting beams 217 are located on a side portion of the plate member 213 facing away from the accommodating space 201.

It can be understood that the mounting beams 217 are located outside the accommodating space 201.

By adopting the technical solution of this embodiment, the mounting beams 217 are located outside the accommodating space 201, and the mounting beams 217 do not occupy the space of the accommodating space 201, such that the accommodating space 201 can accommodate more battery cells 100, which is conducive to increasing the volumetric energy density of the battery 1100.

In another embodiment of the present application, the first box 210 further includes a first module beam 218 and a second module beam 219 for connecting with the battery cell 100, the first module beam 218 and the second module beam 219 are located in the accommodating space 201, the first module beam 218 is connected with one side portion of the two side portions of the plate member 213 oppositely distributed along the third direction Y, and the second module beam 219 is connected with the other side portion of the two side portions of the plate member 213 oppositely distributed along the third direction Y.

Module beams are provided on both side portions of the plate member 213 oppositely distributed along the third direction Y, one module beam being the first module beam 218 and the other module beam being the second module beam 219. The module beams are located in the accommodating space 201, the module beams are connected with the plate member 213 to achieve fixing of the module beams in the accommodating space 201, and the module beams are connected with the battery cell 100, such that the module beams play a role in supporting and fixing the battery cell 100, which is conducive to improving the structural strength of the battery box 200 and improving the use reliability of the battery 1100.

In another embodiment of the present application, along the third direction Y, a first one of the mounting beams 217 is disposed opposite to the first module beam 218, and/or a last one of the mounting beams 217 is disposed opposite to the second module beam 219.

The multiple mounting beams 217 are sequentially arranged along the third direction Y, the first mounting beam 217 is disposed opposite to the first module beam 218, the first mounting beam 217 and the first module beam 218 are located on two opposite sides of the plate member 213 along the first direction Z, and one side portion of the plate member 213 along the third direction Y is sandwiched between the first mounting beam 217 and the first module beam 218, which can increase the structural strength of the first box 210 at the first module beam 218, conducive to improving the structural strength of the first box 210. Similarly, the last mounting beam 217 is disposed opposite to the second module beam 219, the last mounting beam 217 and the second module beam 219 are located on two opposite sides of the plate member 213 along the first direction Z, and the other side portion of the plate member 213 along the third direction Y can be sandwiched between the first mounting beam 217 and the second module beam 219, which can increase the structural strength of the first box 210 at the second module beam 219, conducive to improving the structural strength of the first box 210.

In one possible implementation, along the third direction Y, the first mounting beam 217 is disposed opposite to the first module beam 218, which can increase the structural strength of the first box 210 at the first module beam 218, conducive to improving the structural strength of the first box 210.

In one possible implementation, along the third direction Y, the last mounting beam 217 is disposed opposite to the second module beam 219, which can increase the structural strength of the first box 210 at the second module beam 219, conducive to improving the structural strength of the first box 210.

In one possible implementation, along the third direction Y, the first mounting beam 217 is disposed opposite to the first module beam 218, and the last mounting beam 217 is disposed opposite to the second module beam 219, which can increase the structural strength of two opposite side portions of the first box 210 along the third direction Y, effectively improving the structural strength of the first box 210.

By adopting the technical solution of this embodiment, the structural strength of the first box 210 can be improved, which is conducive to improving the use reliability of the battery 1100.

In another embodiment of the present application, the plate member 213 is a heat exchange member for exchanging heat with the battery cell 100.

The heat exchange member can refer to the plate member 213 configured to exchange heat with the battery cell 100; and a heat exchange channel is provided in the heat exchange member, and the heat exchange medium flows through the heat exchange channel while exchanging heat with the battery cell 100 to achieve temperature control of the battery cell 100, so as to improve the performance of the battery 1100. For example, the heat exchange member is a cold plate.

By adopting the technical solution of this embodiment, the plate member 213 is directly used as the heat exchange member, so that no separate plate member 213 needs to be provided, which can reduce parts, save space, and increase the volumetric energy density of the battery 1100.

In another embodiment of the present application, the fixing portion 211 is configured to connect with a mounting mating member through the bolt 230 to achieve mounting of the battery box 200.

The mounting mating member can refer to a component that achieves mounting of the battery 1100, the mounting mating member is provided with a third connecting hole, the bolt 230 passes through the third connecting hole and the first connecting hole and then threadedly connects with the threaded hole 221, thereby achieving fixed connection between the battery box 200 and the mounting mating member, achieving mounting of the battery 1100. Exemplarily, the mounting mating member can be a chassis component of the vehicle 1000, such as a cross beam or a longitudinal beam.

By adopting the technical solution of this embodiment, the fixing portion 211 can serve as the mounting structure of the battery 1100, the mounting of the battery 1100 is achieved through the bolt 230, and the mounting operation is simple, which is conducive to improving the mounting efficiency.

The battery box 200 of the embodiments of the present application will be described below in conjunction with some embodiments.

### Embodiment 1

Referring to FIGs. 2 to 11, in this embodiment, the battery box 200 includes a first box 210, a second box 240, a bolt 230, and a connecting member 220. The first box 210 includes a plate member 213, a side frame bar 214, a first side plate, and a second side plate.

Along the first direction Z, opposite side portions of the plate member 213 are respectively provided with an accommodating space 201 and a fixing portion 211, and the fixing portion 211 is provided with a first connecting hole 2111. The connecting member 220 is provided with a threaded hole 221 for screwing with the bolt 230, and the first connecting hole 2111 and the threaded hole 221 are oppositely disposed such that the bolt 230 passes through the first connecting hole 2111 and screws with the threaded hole 221.

An axis of the first connecting hole 2111 is parallel to the second direction X, and the first direction Z is perpendicular to the second direction X. The connecting member 220 is an elongated structure extending along the third direction Y, and the first direction Z, the second direction X, and the third direction Y are pairwise perpendicular. Multiple threaded holes 221 are provided, and the multiple threaded holes 221 are spaced apart along the third direction Y.

The fixing portion 211 is configured with a mounting cavity 2112 for communication with the first connecting hole 2111, and the connecting member 220 is located in the mounting cavity 2112.

The connecting member 220 is bonded to the cavity wall surface of the mounting cavity 2112 provided with the first connecting hole 2111.

Two opposite surfaces of the connecting member 220 along the first direction Z respectively abut against cavity wall surfaces of the mounting cavity 2112 oppositely disposed along the first direction Z.

Two opposite side portions of the plate member 213 along the second direction X are respectively connected with side frame bars 214. The side frame bar 214 includes a frame body portion 2141 and a side plate portion 2142, one side of the frame body portion 2141 is connected with the side portion of the plate member 213, the side plate portion 2142 is connected with the other side of the frame body portion 2141, and the side plate portion 2142 protrudes from a side portion of the plate body facing the accommodating space 201. The frame body portion 2141 is a hollow structure, the hollow cavity of the frame body portion 2141 is the mounting cavity 2112, and a side wall of the frame body portion 2141 facing away from the plate member 213 is provided with the first connecting hole 2111.

Two opposite side portions of the second box 240 along the second direction X are respectively provided with second connecting holes 241, and after the bolt 230 passes through the second connecting hole 241 and the first connecting hole 2111, it screws with the threaded hole 221. The first box 210, the plate member 213, and the side frame bar 214 enclose the accommodating space 201; and the side plate portion 2142 is located in the second box 240, and a sealing member 250 is provided between the side plate portion 2142 and an inner wall surface of the second box 240.

The first sealing plate 215 and the second sealing plate 216 are respectively fixed on two opposite sides of the plate member 213 along the third direction Y, the first bent portion 2133 is located on a side portion of the plate member 213 facing away from the accommodating space 201, the second bent portion 2134 is located on a side portion of the plate member 213 facing the accommodating space 201, the first sealing plate 215 is welded with the first bent portion 2133, and the second sealing plate 216 is welded with the fourth sealing plate, thereby achieving sealed connection between the first sealing plate 215, the second sealing plate 216, and the plate member 213. The first sealing plate 215, the second sealing plate 216, the two side frame bars 214, and the plate member 213 jointly form a U-shaped structure, and the second box 240 covers the open side of the U-shaped structure, thereby enclosing the accommodating space 201. The second box 240 also has a U-shaped structure to match the structure of the first box 210, two opposite side walls of the second box 240 are respectively connected with the two side frame bars 214 through the bolt 230, the first sealing plate 215 and the second sealing plate 216 cover two opposite openings of the second box 240 along the third direction Y, and the first box 210 and the second box 240 jointly enclose the accommodating space 201.

The first box 210 further includes multiple mounting beams 217 connected with the plate member 213, the multiple mounting beams 217 are located between two mounting portions, the multiple mounting beams 217 are spaced apart along the third direction Y, and the first direction Z, the second direction X, and the third direction Y are pairwise perpendicular.

The first box 210 further includes a first module beam 218 and a second module beam 219 for connecting with the battery cell 100, the first module beam 218 and the second module beam 219 are located in the accommodating space 201, the first module beam 218 is connected with one side portion of the two side portions of the plate member 213 oppositely distributed along the third direction Y, and the second module beam 219 is connected with the other side portion of the two side portions of the plate member 213 oppositely distributed along the third direction Y.

Along the third direction Y, a first one of the mounting beams 217 is disposed opposite to the first module beam 218, and a last one of the mounting beams 217 is disposed opposite to the second module beam 219.

### Embodiment 2

Referring to FIGs. 14 to 19, the difference between this embodiment and Embodiment 1 is that: a side portion of the plate member 213 is bent such that the plate member 213 forms a plate body portion 2131 and a bent structure; the bent structure includes a first bent section 21321, a second bent section 21322, a third bent section 21323, a fourth bent section 21324, and a fifth bent section 21325 that are sequentially connected; the first bent section 21321 is bent from the side portion of the plate body portion 2131 toward the accommodating space 201, and the first bent section 21321 is perpendicular to the plate body portion 2131; the second bent section 21322 is attached to the first bent section 21321, and the second bent section 21322 is located on a side portion of the first bent section 21321 facing away from the plate body portion 2131; the third bent section 21323 is parallel to the plate body portion 2131, the third bent section 21323 is spaced apart from a surface of the plate body portion 2131 facing away from the accommodating space 201, and the third bent section 21323 is parallel and spaced apart from the fourth bent section 21324; the fifth bent section 21325 is attached to a surface of the plate body portion 2131 facing away from the accommodating space 201; where a portion of the second bent section 21322 located on a side of the plate body portion 2131 facing away from the accommodating space 201, the third bent section 21323, the fourth bent section 21324, and the fifth bent section 21325 form the fixing portion 211, a surface of the plate body portion 2131 facing away from the accommodating space 201, a portion of the second bent section 21322 located on a side of the plate body portion 2131 facing away from the accommodating space 201, the third bent section 21323, and the fourth bent section 21324 jointly enclose the mounting cavity 2112, and the first connecting hole 2111 is provided in a portion of the second bent section 21322 located on a side of the plate body portion 2131 facing away from the accommodating space 201.

### Embodiment 3

Referring to FIGs. 12 and 13, the difference between this embodiment and Embodiments 1 and 2 is that: the threaded hole 221 includes a first threaded hole section 2211 and a second threaded hole section 2212 that are distributed along the second direction X and communicate with each other. The connecting member 220 includes a body 222 and a protruding portion 223 that are distributed along the second direction X and connected, the protruding portion 223 protrudes from a surface of the body 222, the body 222 is configured with the first threaded hole section 2211, and the protruding portion 223 is configured with the second threaded hole section 2212.

According to one embodiment of the present application, referring to FIGs. 2 and 3, the embodiments of the present application further provide a battery 1100, including the battery box 200 as described in the above embodiments.

According to one embodiment of the present application, referring to FIG. 1, the embodiments of the present application further provide an electric apparatus, including the battery 1100 as described in the above embodiments.

The description of each embodiment above tends to emphasize the differences between the various embodiments, and their identical or similar points can be referred to each other. For brevity, they are not repeated herein.

Finally, it should be noted that: the above embodiments are only used to illustrate the technical solutions of the present application, and not to limit them; although the present application has been described in detail with reference to the foregoing embodiments, those of ordinary skill in the art should understand that: the technical solutions recorded in the foregoing embodiments can still be modified, or some or all of the technical features thereof can be equivalently replaced. These modifications or replacements do not make the essence of the corresponding technical solutions depart from the scope of the technical solutions of the embodiments of the present application, and they should all be covered within the scope of the claims and the specification of the present application. In particular, as long as there is no structural conflict, any combination of the various technical features mentioned in the various embodiments can be made in any manner. The present application is not limited to the specific embodiments disclosed in the text, but includes all technical solutions falling within the scope of the claims.

## Claims

1. A battery box comprising:
a first box, provided with an accommodating space for accommodating a battery cell, wherein a side portion of the first box facing away from the accommodating space is provided with a fixing portion, and the fixing portion is provided with a first connecting hole; and
a connecting member, provided with a threaded hole for screwing with a bolt, wherein the first connecting hole and the threaded hole are oppositely disposed such that the bolt passes through the first connecting hole and screws with the threaded hole.

2. The battery box according to claim 1, wherein the connecting member is a steel member, an aluminum alloy member, or a copper alloy member.

3. The battery box according to claim 1 or 2, wherein the accommodating space and the fixing portion are respectively located on two opposite sides of the first box along a first direction.

4. The battery box according to claim 3, wherein an axis of the first connecting hole is parallel to a second direction, the first direction being perpendicular to the second direction.

5. The battery box according to claim 4, wherein a nominal diameter of the threaded hole is D, and a size of the connecting member in the first direction is L, wherein 1.1 ≤ L/D ≤ 2, and optionally, 1.2 ≤ L/D ≤ 1.7.

6. The battery box according to claim 4 or 5, wherein the connecting member is an elongated structure extending along a third direction, the first direction, the second direction, and the third direction being pairwise perpendicular.

7. The battery box according to claim 6, wherein multiple threaded holes are provided, and the multiple threaded holes are spaced apart along the third direction.

8. The battery box according to any one of claims 3 to 7, wherein the fixing portion is configured with a mounting cavity for communication with the first connecting hole, and the connecting member is located in the mounting cavity.

9. The battery box according to claim 8, wherein the connecting member is bonded to a cavity wall surface of the mounting cavity.

10. The battery box according to claim 8 or 9, wherein at least one of two opposite surfaces of the connecting member along the first direction abuts against the cavity wall surface of the mounting cavity.

11. The battery box according to any one of claims 1 to 10, wherein the threaded hole comprises a first threaded hole section and a second threaded hole section in communication with each other; and
the connecting member comprises a body and a protruding portion that are connected, the protruding portion protrudes from a surface of the body, the body is configured with the first threaded hole section, and the protruding portion is configured with the second threaded hole section.

12. The battery box according to claim 11, wherein a height of the protruding portion protruding from the body is h, a nominal diameter of the threaded hole is D, and 0.5 ≤ h/D ≤ 2; and optionally, 0.7 ≤ h/D ≤ 1.5.

13. The battery box according to claim 11, wherein a height of the protruding portion protruding from the body is h, and 0.5 mm ≤ h/D ≤ 50 mm; and optionally, 5 mm ≤ h/D ≤ 30 mm.

14. The battery box according to any one of claims 1 to 13, wherein the first box comprises a plate member, and the accommodating space and the fixing portion are respectively located on two opposite side portions of the plate member along the first direction; and
a side portion of the plate member is bent to form a bent structure, and at least part of the bent structure forms the fixing portion; or, the first box further comprises a side frame bar, the side frame bar is connected with a side portion of the plate member, and at least part of the side frame bar forms the fixing portion.

15. The battery box according to claim 14, wherein the battery box further comprises a second box, the second box is connected with the fixing portion, and the first box and the second box enclose the accommodating space.

16. The battery box according to claim 15, wherein the second box is provided with a second connecting hole for the bolt to pass through.

17. The battery box according to claim 15 or 16, wherein the fixing portion is connected with a connecting portion, the connecting portion protrudes from a surface of the plate member facing the accommodating space, the connecting portion is located in the second box, and a sealing member is provided between the connecting portion and an inner wall of the second box.

18. The battery box according to any one of claims 14 to 17, wherein two opposite side portions of the plate member along the second direction are provided with the fixing portion, the first direction intersecting with the second direction.

19. The battery box according to claim 18, wherein the first box further comprises a first sealing plate and a second sealing plate, one side portion of two side portions of the plate member oppositely distributed along the third direction is connected with the first sealing plate, the other side portion of the two side portions of the plate member oppositely distributed along the third direction is connected with the second sealing plate, the first sealing plate, the second sealing plate, and the plate member jointly enclose the accommodating space, and the first direction, the second direction, and the third direction are pairwise perpendicular.

20. The battery box according to claim 18 or 19, wherein the first box further comprises multiple mounting beams connected with the plate member, the multiple mounting beams are located between two of the mounting portions, the multiple mounting beams are spaced apart along the third direction, and the first direction, the second direction, and the third direction are pairwise perpendicular.

21. The battery box according to claim 20, wherein the multiple mounting beams are located on a side portion of the plate member facing away from the accommodating space.

22. The battery box according to claim 20 or 21, wherein the first box further comprises a first module beam and a second module beam for connecting with the battery cell, the first module beam and the second module beam are located in the accommodating space, the first module beam is connected with one side portion of the two side portions of the plate member oppositely distributed along the third direction, and the second module beam is connected with the other side portion of the two side portions of the plate member oppositely distributed along the third direction.

23. The battery box according to claim 22, wherein along the third direction, a first one of the mounting beams is disposed opposite to the first module beam, and/or a last one of the mounting beams is disposed opposite to the second module beam.

24. The battery box according to any one of claims 14 to 23, wherein the plate member is a heat exchange member configured to exchange heat with the battery cell.

25. The battery box according to any one of claims 1 to 24, wherein the fixing portion is configured to connect with a mounting mating member through the bolt to achieve mounting of the battery box.

26. A battery, comprising the battery box according to any one of claims 1 to 25.

27. An electric apparatus, comprising the battery according to claim 26.
